# FASCICULE DE BREVET EUROPEEN

(11) **EP 0 923 716 B1**
(45) Date de publication et mention de la délivrance du brevet: **10.12.2003**
(21) Numéro de dépôt: 97938982.2
(22) Date de dépôt: 05.09.1997
(51) Int. Cl.: G01L 3/10, G01L 5/22

(54) **PERFECTIONNEMENT A UN DISPOSITIF DE MESURE DE COUPLE DE TORSION D'UN ARBRE TOURNANT**
VERBESSERUNG AN EINER VORRICHTUNG ZUR MESSUNG DES DREHMOMENTS EINER DREHENDEN WELLE
IMPROVED DEVICE FOR MEASURING THE TORSIONAL MOMENT OF A REVOLVING SHAFT

(30) Priorité: 06.09.1996 FR 9610886
(43) Date de publication de la demande: 23.06.1999
(73) Titulaire: S.N.R. ROULEMENTS, 74010 Annecy Cédex (FR)
(72) Inventeur: NICOT, Christophe, F-74330 Epagny (FR)
(74) Mandataire: Srour, Elie
(86) Numéro de dépôt international: FR9701560
(87) Numéro de publication internationale: WO98010259

(56) Documents cités:
- FR-A- 2 689 633
- US-A- 5 501 110

## Description

L'invention concerne un dispositif de mesure de couple de torsion sur un arbre tournant. L'invention concerne plus particulièrement un dispositif de mesure de couple de torsion permettant de réduire les imprécisions dues aux défauts de coaxialité des différents éléments constitutifs.

La publication FR-2692986 décrit un dispositif de mesure de couple de torsion sur un arbre tournant, dispositif comprenant deux organes générateurs de champ magnétique, solidaires d'un premier support et situés dans le plan d'une section droite dudit arbre et deux dispositifs détecteurs du champ magnétique, solidaires d'un second support et immobilisés dans le plan d'une autre section droite dudit arbre. L'application d'un couple de torsion sur l'arbre tournant se traduit par un déplacement angulaire relatif autour de l'arbre des dispositifs détecteurs par rapport aux dispositifs générateurs de champ magnétique. Cette variation est linéaire par rapport au déplacement. De manière à préserver cette linéarité, il est nécessaire d'assurer que le gradient du champ magnétique produit par les organes générateurs soit le plus constant possible dans l'entrefer séparant lesdits organes générateurs des détecteurs. Dans la configuration décrite dans le document FR2692986, les lignes de champ des organes générateurs bouclent à travers les supports qui sont en matériau ferromagnétique. A cet effet, lesdits supports se prolongent radialement au delà des aimants de manière à pouvoir canaliser les lignes de champ situées à l'extérieur d'un cylindre virtuel passant par les aimants et coaxial à l'arbre. Le boîtier de protection qui vient fermer l'ensemble peut être en un matériau quelconque, ferromagnétique ou non. Mais lorsque l'encombrement radial est limité, comme c'est, par exemple, le cas lorsque le dispositif est destiné à être intégré à un boîtier de direction d'un véhicule, voire à la colonne de direction dudit véhicule, il n'y a plus suffisamment d'espace entre les aimants et le couvercle pour que le champ magnétique puisse boucler à l'intérieur du boîtier de protection. Or le bouclage du champ magnétique à l'extérieur du boîtier de protection n'est pas acceptable car alors, le champ et donc la précision de la mesure dépendraient de l'environnement extérieur au boîtier. Une première solution consiste à utiliser un boîtier en matériau ferromagnétique, le bouclage du champ à la périphérie des aimants se produisant alors dans le boîtier. Mais, étant donné que l'arbre, et donc les aimants qui lui sont liés, tournent par rapport au boîtier, la moindre irrégularité dimensionnelle de ce dernier ou le moindre défaut de coaxialité résultant du montage de l'arbre dans le boîtier entraînera une variation du champ magnétique, et donc de la mesure, variation qui ne sera pas due à un couple. On mesurera ainsi une valeur de couple non nulle dès lors que l'arbre sera en rotation, et ce, même si aucun couple n'est appliqué.

Le dispositif selon l'invention vise à remédier à ces inconvénients. A cet effet, il concerne un dispositif de mesure de couple de torsion sur un arbre tournant comprenant deux organes générateurs de champ magnétique fixés symétriquement par rapport audit arbre dans un premier plan perpendiculaire à ce même arbre et deux organes détecteurs du champ magnétique fixés, symétriquement par rapport à l'arbre, dans un second plan parallèle et décalé axialement par rapport au premier plan, caractérisé en ce qu'il comporte un organe de canalisation des lignes de champ magnétique, en matériau ferromagnétique, solidaire de l'arbre et entourant ledit arbre, à la périphérie des organes détecteurs et générateurs de champ magnétique, sur au moins la portion d'arbre comprise entre le premier et le second plan.

Selon une autre caractéristique de l'invention, les organes générateurs et les organes détecteurs sont portés respectivement par un premier support et un second support qui sont fixés sur l'arbre, l'organe de canalisation étant constitué par une extension axiale d'un des supports en direction de l'autre.

Selon une autre caractéristique de l'invention, l'organe de canalisation est constitué d'une pièce tubulaire fixée à l'un des supports.

L'organe de canalisation du champ magnétique disposé à la périphérie de l'entrefer séparant les organes générateurs et les détecteurs de champ magnétique permet de confiner le champ magnétique à travers des pièces solidaires en rotation autour de l'arbre. Ceci permet d'optimiser la précision de mesure du dispositif puisque le champ magnétique ne dépend plus de la position angulaire de l'arbre. Ainsi, un défaut de géométrie de ces pièces n'a pas d'incidence sur la constance du champ magnétique. Le dispositif selon l'invention permet donc d'obtenir une bonne précision de mesure tout en conservant des tolérances de réalisation et d'assemblage des pièces suffisamment larges pour être compatibles avec une production en grande série.

D'autres caractéristiques et avantages de l'invention apparaîtront à la lecture de la description d'un exemple de réalisation du dispositif de mesure de couple selon l'invention, en référence au dessin dans lequel :
- la figure 1 est une vue en demi-coupe longitudinale du dispositif selon l'invention,
- la figure 2 est une vue en coupe selon la ligne II-II de la figure 1.

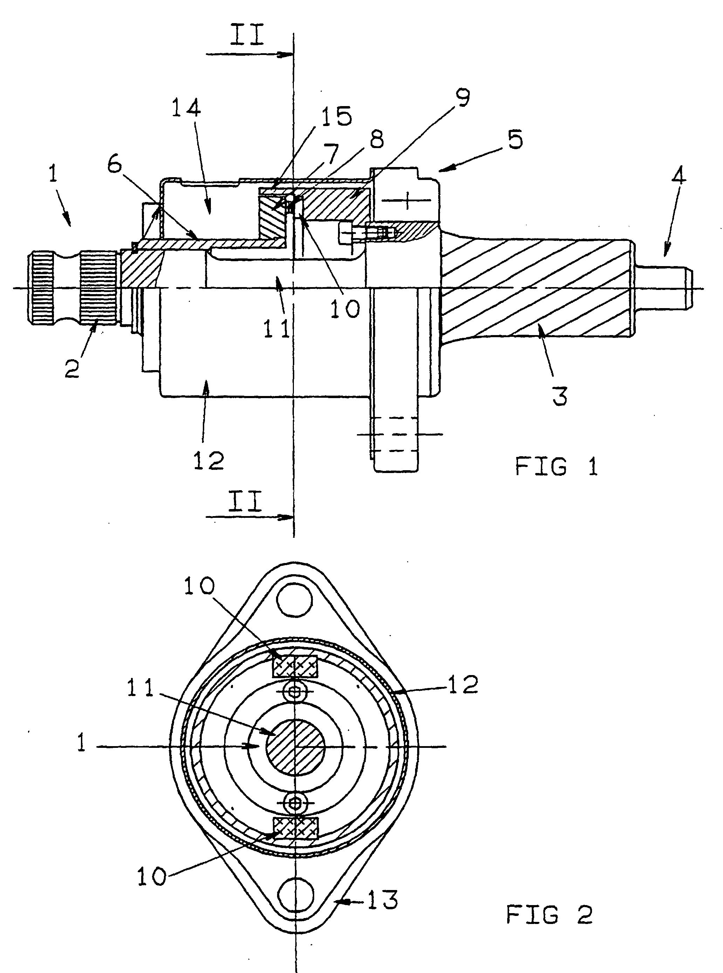

L'arbre 1 représenté sur les figures 1 et 2 est, selon un exemple de réalisation de l'invention, l'arbre réalisant, au sein d'un système de direction, la liaison entre la crémaillère et l'arbre de transmission de la colonne de direction (non représentés). A cet effet, l'arbre 1 comporte à son extrémité gauche des cannelures 2 permettant son raccordement à l'arbre de transmission de la colonne de direction. L'extrémité droite porte un pignon de crémaillère 3 qui se prolonge sur sa droite par une portée d'arbre 4 de section réduite, usinée de manière à constituer la bague intérieure d'un premier palier de roulement, à aiguilles. L'arbre 1 comporte, situé immédiatement à la gauche du pignon de crémaillère 3, un second palier de roulement 5.

La figure 1 représente l'arbre 1 équipé d'un dispositif de mesure du couple de torsion dont le fonctionnement est décrit dans la publication FR-2692986. L'arbre 1 porte une première bague 6 sensiblement tubulaire qui se prolonge radialement par un premier support 7 annulaire portant deux organes détecteurs de champ magnétique 8 disposés symétriquement par rapport à l'axe de l'arbre 1 dans un premier plan perpendiculaire audit arbre 1, l'un des organes détecteurs 8 n'étant pas visible sur la demi-coupe de la figure 1. L'arbre 1 porte également un second support 9 sensiblement tubulaire tourné vers le premier support 7. Le second support 9 est représenté sur les figures, fixé sur l'épaulement de la bague intérieure du second palier 5 ce qui permet d'augmenter la compacité du dispositif, mais il est clair qu'un autre type de montage ne sortirait pas du cadre de l'invention. Le second support 9 porte deux organes générateurs de champ magnétique 10 disposés symétriquement par rapport à l'axe de l'arbre 1, dans un second plan perpendiculaire audit arbre 1 et faisant face aux organes détecteurs 8, l'un des organes générateurs 10 n'étant pas visible sur la demi-coupe de la figure 1.

De manière à localiser axialement la déformation en torsion de l'arbre 1 entre le premier 7 et le second support 9, l'arbre 1 présente entre lesdits supports 7,9 une réduction de diamètre.

Un capot 12 recouvre l'ensemble du dispositif de mesure de couple et est fixé sur la bague 13 du palier 5. Il intègre un passage tournant 14. De manière à ce que le champ magnétique engendré par les organes générateurs 10 puisse boucler sur une partie solidaire de l'arbre 1, le second support 9 se prolonge axialement en direction du premier support 7 par une extension radiale 15 recouvrant au moins l'entrefer entre les organes générateurs de champ magnétique 10 et les organes détecteurs 8. Sur la figure 1, l'extension radiale 15 entoure également la partie annulaire 7. Bien évidemment, le premier support 7, le second support 9 et son extension radiale 15 sont réalisés en matériau ferromagnétique. L'extension radiale 15 peut être d'une pièce avec le second support 9 ou au contraire être constituée d'une partie cylindrique rapportée sur ledit second support 9 ou sur le premier support 7. Cette disposition permet d'optimiser la précision de mesure du dispositif puisque le champ magnétique est canalisé par des pièces solidaires en rotation de l'arbre 1. Ainsi, un défaut de géométrie de ces pièces n'a pas d'incidence sur la constance du champ magnétique. Au contraire lorsque le champ magnétique boucle à travers le boîtier de protection, la moindre irrégularité dimensionnelle de ce dernier se traduit , du fait de son mouvement relatif par rapport à l'arbre 1 et donc, par rapport aux organes générateurs 10, par une variation de la mesure. De même, le moindre défaut de coaxialité lié aux tolérances de montage, entre le boîtier 12 et l'arbre 1, entraînera une variation de la mesure. Le dispositif selon l'invention permet donc d'obtenir une bonne précision de mesure tout en conservant des tolérances de réalisation et d'assemblage des pièces suffisamment larges pour être compatibles avec une production en grande série.

Le capot 12, qui n'a plus de fonction magnétique peut être réalisé en un matériau non ferromagnétique.

Bien entendu, l'invention n'est nullement limitée au mode de réalisation décrit et illustré qui n'a été donné qu'à titre d'exemple. En particulier, le dispositif est applicable à tout type d'arbre sur lequel il est nécessaire d'implanter un dispositif de mesure de couple de torsion.

## Revendications

1. Dispositif de mesure de couple de torsion sur un arbre tournant (1) comprenant deux organes générateurs (10) de champ magnétique fixés symétriquement par rapport audit arbre (1) dans un premier plan perpendiculaire à ce même arbre et deux organes détecteurs (8) du champ magnétique fixés, symétriquement par rapport à l'arbre, dans un second plan parallèle et décalé axialement par rapport au premier plan, **caractérisé en ce qu'**il comporte un organe de canalisation (15) des lignes de champ magnétique, en matériau ferromagnétique, solidaire de l'arbre (1) et entourant ledit arbre (1), à la périphérie des organes détecteurs (8) et générateurs (10) de champ magnétique, sur au moins la portion d'arbre (1) comprise entre le premier et le second plan.

2. Dispositif de mesure de couple de torsion selon la revendication 1, **caractérisé en ce que** les organes générateurs (10) et les organes détecteurs (8) sont portés respectivement par un premier support (7) et un second support (9) qui sont fixés sur l'arbre (1), l'organe de canalisation étant constitué par une extension axiale (15) d'un des supports en direction de l'autre.

3. Dispositif de mesure de couple de torsion selon la revendication 2 **caractérisé en ce que** l'extension axiale (15) est constituée par une pièce tubulaire fixée à l'un des supports (7,9).

## Patentansprüche

1. Vorrichtung zur Messung des Torsionsmomentes einer sich drehenden Welle (1), mit zwei feststehenden Magnetfelderzeugern (10), die symmetrisch bezüglich der Welle (1) in einer ersten senkrecht zu dieser Welle verlaufenden Ebene angeordnet sind und mit zwei feststehenden Anordnungen (8) zur Erfassung des Magnetfeldes, die symmetrisch bezüglich der Welle (1) in einer zweiten Ebene angeordnet sind, die parallel zur ersten Ebene und axial verschoben zu ihr verläuft, **dadurch gekennzeichnet, dass** sie ein Bauteil (15) für die Führung der Linien des Magnetfeldes aufweist, das aus einem ferromagnetischen Material besteht, das fest mit der Welle (1) verbunden ist und das die Welle (1) am Umfang der Anordnungen (8) zur Erfassung und der Magnetfelderzeuger (10) entlang zumindest des Abschnitts der Welle (1) umgibt, der sich zwischen der ersten und der zweiten Ebene erstreckt.

2. Vorrichtung zur Messung des Torsionsmomentes nach Anspruch 1, **dadurch gekennzeichnet, dass** die Magnetfelderzeuger (10) und die Anordnungen (8) zur Erfassung auf einer ersten Halterung (7) bzw. auf einer zweiten Halterung (9) angeordnet sind, die auf der Welle (1) befestigt sind und dass das Bauteil für die Führung aus einem radialen Vorsprung (15) einer der Halterungen in Richtung zur anderen Halterung hin besteht.

3. Vorrichtung zur Messung des Torsionsmomentes nach Anspruch 2, **dadurch gekennzeichnet, dass** der radiale Vorsprung (15) aus einem rohrförmigen Teil besteht, das an einer der Halterungen (7, 9) befestigt ist.

## Claims

1. A device for measuring the torsional couple on a rotary shaft (1) comprising two magnetic field generator members (10) fixed symmetrically with respect to this shaft (1) in a first plane perpendicular to this shaft and two magnetic field detector members (8) fixed symmetrically with respect to the shaft in a second parallel plane axially offset with respect to the first plane, **characterised in that** it comprises a member (15) for channelling the magnetic field lines, of ferromagnetic material, rigid with the shaft (1) and surrounding the shaft (1), on the periphery of the magnetic field detector (8) and generator (10) members, on at least the portion of the shaft (1) comprised between the first and the second plane.

2. A device for measuring the torsional couple as claimed in claim 1, **characterised in that** the generator members (10) and the detector members (8) are borne respectively by a first support (7) and a second support (9) which are fixed on the shaft (1), the channelling member being formed by an axial extension (15) of one the supports in the direction of the other.

3. A device for measuring the torsional couple as claimed in claim 2, **characterised in that** the axial extension (15) is formed by a tubular member fixed to one of the supports (7, 9).
